# EUROPEAN PATENT APPLICATION

(11) **EP 2 605 242 A1**
(43) Date of publication of application: **19.06.2013**
(21) Application number: 12161672.6
(22) Date of filing: 28.03.2012
(51) Int. Cl.: G11B 19/02

(54) **Data processing module of digital audio processing device, digital audio processing controller module of portable device, and control system**

(30) Priority: 12.12.2011 TW 100145832
(71) Applicant: Hanpin Electron Co., Ltd., Tainan City (TW)
(72) Inventor: Liu, Shen-Chi, Jen Teh District, Tainan City (TW); Lan, Tes-Ming, Jen Teh District, Tainan City (TW); Weng, Sheng-Feng, Jen Teh District, Tainan City (TW); Hung, Chih-Pin, Jen Teh District, Tainan City (TW)
(74) Representative: 2K Patentanwälte Blasberg Kewitz & Reichel

(57) **Abstract**

The invention relates to a data processing module of a digital audio processing device, a digital audio processing controller module of a portable device and a control system. Using the data processing module of the digital audio processing device and the digital audio processing controller module of the portable device, the portable device can transmit control command packet to control the digital audio processing device. The user can use a large-size screen of the portable device to control the digital audio processing device to overcome the shortage in the display function of conventional digital audio processing device. Furthermore, when using the portable device under the condition where the hardware of the digital audio processing device is not changed, the functions of the digital audio processing device can be additionally extended. Therefore, the extended functions of the digital audio processing device can be flexibly added in response to customers and DJ's requirements.

## Description

### BACKGROUND OF THE INVENTION

### 1. Description of the Related Art

As music formats evolve from the earlier vinyl recoder to the more recent compact disc (CD) digitized format, music is becoming increasingly easy to be collected and stored. For a disk jockey (DJ) or a philharmonic, he possesses an increasing amount of digital music and this is especially true when a great amount of music data can be stored in a very small storage space when stored in a music compression format such as MP3.

DJ nowadays possesses an increasing amount of digital music. To manage, select, and use the stored digital music is just one of the difficulties that DJ is faced with today. In a modem digital audio processing device, a larger screen is used to ease the selection of a song, but the problem relating to song selection still cannot be obviated due to screen display limitation and manufacturing cost concern of the digital audio processing device.

Furthermore, the functions and operations of a currently commercially available digital audio processing device have already been determined before it leaves the factory. Even if the functions and operations can be updated through firmware, such can only correct a fault in the original program and the operations may be slightly modified as a result from such; thus market and consumer requirements change rapidly but cannot be met immediately. For example, if a function of a volume adjustment key has not been designed for a digital audio processing device (volume adjustment design does not exist on the firmware nor on the exterior of the device), the function of the volume adjustment key cannot be achieved even if update is performed through the firmware, and the user must buy a new digital audio processing device with the function.

Moreover, most DJs have vastly different performance styles different habits when operating digital audio processing devices, and different views on the necessary functional requirements of digital audio processing devices. Since the operational manners and functions of currently commercially available digital audio processing devices are already pre-fixed, they cannot meet the requirement of user customized setting.

Therefore, it is necessary to provide a control system, a data processing module of a digital audio processing device, and a digital audio processing controller module of a portable device to solve the above-mentioned problem.

### SUMMARY OF THE INVENTION

The invention provides a data processing module of a digital audio processing device. The data processing module includes a communication module and a digital data processing unit. The communication module is used to receive control command packet from a portable device. The digital data processing unit is connected to the communication module and is used to generate at least one control command according to the control command packet to process corresponding audio data.

The invention further provides a digital audio processing controller module of a portable device. The digital audio processing controller module of the present invention includes a user interface (UI), a UI management unit, a data manage & control unit, and a command transceiver unit. The UI is used to display an operation screen of a digital audio processing device on a screen. The UI management unit is used to determine an operation action of a user on the screen and to generate at least one control command. The data manage & control unit is used to generate at least one audio control message according to the at least one control command. The command transceiver unit is used to process the at least one audio control message into control command packet and to transmit the control command packet to the digital audio processing device.

The invention also provides a control system including a portable device and a digital audio processing device. The portable device includes a digital audio processing controller module. The digital audio processing controller module includes a UI, a UI management unit, a data manage & control unit, and a command transceiver unit. The UI is used to display an operation screen of a digital audio processing device on a screen. The UI management unit is used to determine an operation action of a user on the screen and to generate at least one control command. The data manage & control unit is used to generate at least one audio control message according to the at least one control command. The command transceiver unit is used to process the at least one audio control message into control command packet and to transmit the control command packet to the digital audio processing device. The digital audio processing device includes a data processing module. The data processing module includes a communication module and a digital data processing unit. The communication module is used to receive control command packet from a portable device. The digital data processing unit is connected to the communication module and is used to generate at least one control command according to the control command packet to process corresponding audio data.

### BRIEF DESCRIPTION OF THE DRAWINGS

FIG. 1 is a block diagram of a data processing module of a digital audio processing device according to a first embodiment of the present invention;
FIG. 2 is a block diagram of the digital data processing unit according to the first embodiment of the present invention;
FIG. 3 is a block diagram of a data processing module of a digital audio processing device according to a second embodiment of the present invention;
FIG. 4 is a block diagram of the digital data processing unit according to the second embodiment of the present invention;
FIG. 5 is a block diagram of a digital audio processing controller module of a portable device according to the present invention;
FIG. 6 is a block diagram of a UI of the present invention;
FIG. 7 is a block diagram of a UI management unit of the present invention; and
FIG. 8 is a block diagram of a data manage & control unit of the present invention.

### PREFERRED EMBODIMENT OF THE PRESENT INVENTION

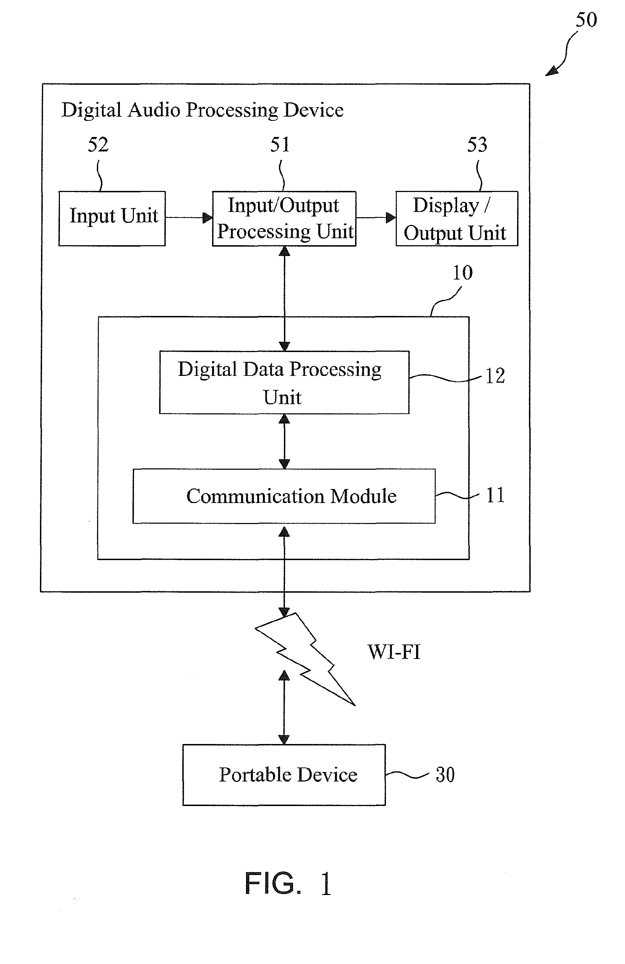

FIG. 1 is a block diagram of a data processing module of a digital audio processing device according to a first embodiment of the present invention. The data processing module 10 of the present invention is disposed in the digital audio processing device 50 and includes a communication module 11 and a digital data processing unit 12. The communication module 11 is used to receive control command packet from a portable device 30. The digital data processing unit 12 is connected to the communication module 11 and is used to generate at least one control command according to the control command packet to control a corresponding audio device. The portable device 30 can be a mobile computer, a tablet computer, or a smart phone. The portable device 30 can transmit control command packet for controlling the digital audio processing device 50. The portable device 30 can also receive control command packet from the digital audio processing device 50. Moreover, the portable device 30 can transmit audio data to the digital audio processing device 50 and receive the audio data from the digital audio processing device 50. That is to say, the portable device 30 and the digital audio processing device 50 can communicate bi-directionally to transmit and receive the control command packet and the audio data.

The audio data includes audio information and an audio stream. The audio information is information about a song such as, a filename, a title, an artist, an album, a genre, a BPM, and time data. The audio stream is a stream of music actually played and can be a compressed or decompressed file.

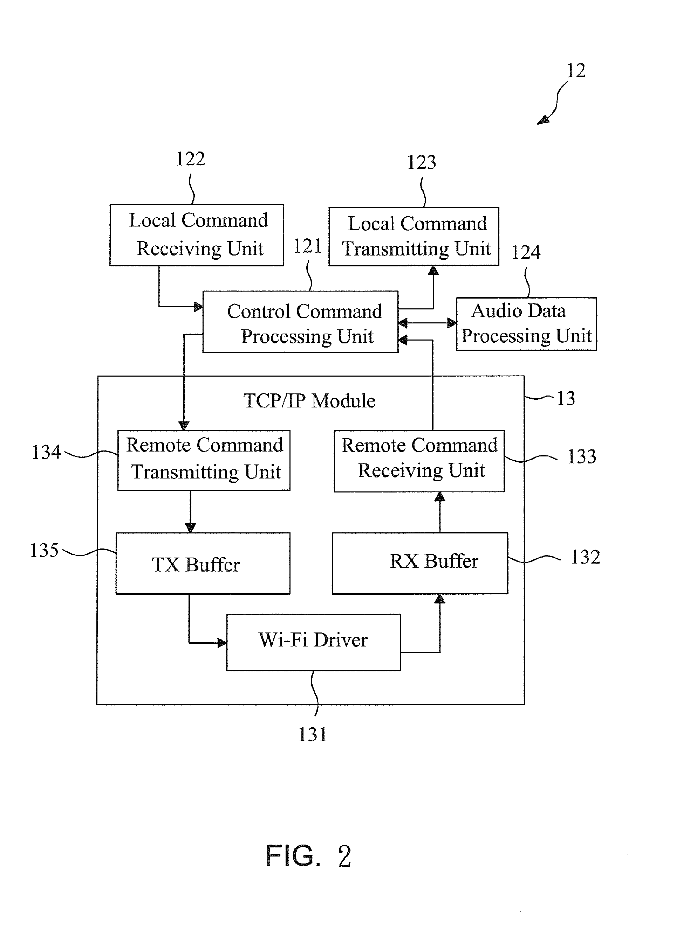

FIG. 2 is a block diagram of the digital data processing unit according to the first embodiment of the present invention. Referring to FIG. 1 and FIG. 2, in an embodiment of the present invention, the digital data processing unit 12 includes a Transmission Control Protocol/Internet Protocol (TCP/IP) module 13 for communicating with the communication module 11 and receiving the control command packet. The communication module 11 is a Wi-Fi communication module for communicating with the portable device 30 through Wi-Fi.

The TCP/IP module 13 includes a Wi-Fi driver 131, a receiving (RX) buffer 132, and a remote command receiving unit 133. The Wi-Fi driver 131 is used to communicate with the communication module 11. The RX buffer 132 is used to receive the control command packet or the audio data from the portable device 30. The remote command receiving unit 133 is used to receive the control command packet or the audio data from the RX buffer 132.

The digital data processing unit 12 includes a control command processing unit 121 for receiving the control command packet from the remote command receiving unit 133 to generate at least one control command. For example, a user can operate the portable device 30 to select music, to transmit control command packet to the control command processing unit 121 through the communication module 11 and the TCP/IP module 13, and to load a song selected in a multimedia storage device after the command is parsed, so that the digital audio processing device 50 can play and process the music selected by the user on the portable device 30.

In an embodiment of the present invention, the TCP/IP module 13 further includes a remote command transmitting unit 134 and a transmitting (TX) buffer 135. The remote command transmitting unit 134 is used to receive the control command or audio data from the control command processing unit 121 to transmit the control command or the audio data. The TX buffer 135 is used to receive the control command or the audio data from the remote command transmitting unit 134 to transmit the control command or the audio data to the Wi-Fi driver 131. The Wi-Fi communication module 11 transmits the control command or the audio data to the portable device 30. Therefore, the digital audio processing device 50 can transmit the stored audio data to the portable device 30, so that audio data of the portable device 30 can be synchronous with the audio data of the digital audio processing device 50.

The digital data processing unit 12 further includes a local command receiving unit 122 and a local command transmitting unit 123. The local command receiving unit 122 is used to receive input control command packet or audio data from an input/output processing unit 51. The local command transmitting unit 123 is used to receive the control command or the audio data of the control command processing unit 121 and to transmit the control command or the audio data to the input/output processing unit 51.

For example, the user can use an input unit 52 (a control key) of the digital audio processing device 50 to input the input control command packet to the input/output processing unit 51, transmit the input control command packet to the local command receiving unit 122 and then to the control command processing unit 121, and process the corresponding audio data according to the input control command packet.

Furthermore, the control command processing unit 121 can transmit the audio data to the local command transmitting unit 123 to transmit the audio data to the input/output processing unit 51, and the input/output processing unit 51 transmits the audio data to a display/output unit 53 for display.

The digital data processing unit 12 further includes an audio data processing unit 124 for receiving the at least one control command of the control command processing unit 121 to generate a corresponding audio control signal to control and process the audio stream and to send a result to an audio output device such as a speaker. The audio data processing unit 124 can be used to decode an encoded song (for example, MP3 and AAC), can process a file system format (such as FAT, NTFS, and CDFS) of a stored medium, or can process audio (for example, effect or volume control) according to the control command.

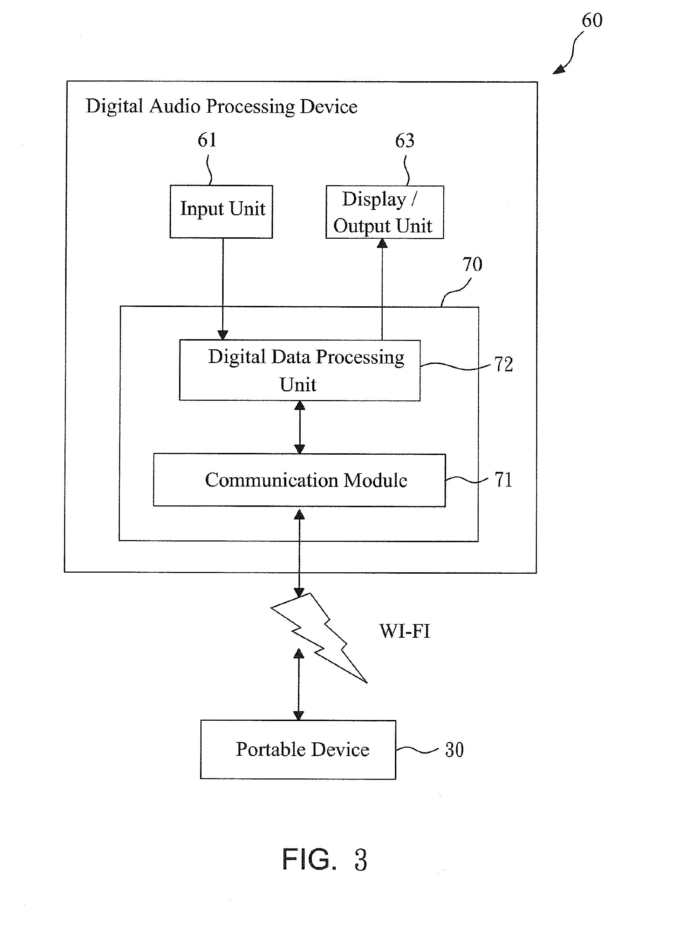

FIG. 3 is a block diagram of a data processing module of a digital audio processing device according to a second embodiment of the present invention. The data processing module 70 of the present invention is mounted in the digital audio processing device 60 and includes a communication module 71 and a digital data processing unit 72. The digital audio processing device 60 further includes an input unit 61 and a display/output unit 63.

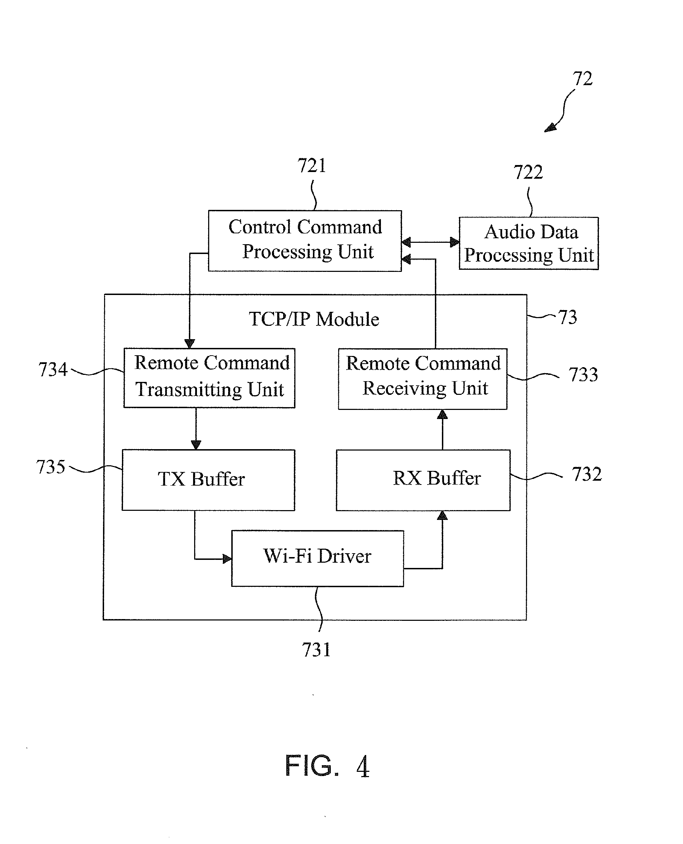

FIG. 4 is a block diagram of the digital data processing unit according to the second embodiment of the present invention. Referring to FIG. 3 and FIG. 4, the digital data processing unit 72 includes a control command processing unit 721, an audio data processing unit 722, and a TCP/IP module 73. The TCP/IP module 73 includes a Wi-Fi driver 731, a RX buffer 732, and a remote command receiving unit 733, a remote command transmitting unit 734, and a TX buffer 735.

Difference between the digital data processing unit 72 of the second embodiment of the present invention and the digital data processing unit 12 of the first embodiment lies in that the digital data processing unit 72 of the second embodiment of the present invention does not have the local command receiving unit 122 and the local command transmitting unit 123 of the digital data processing unit 12 of the first embodiment, and the digital audio processing device 60 does not have the input/output processing unit 51 of the first embodiment. That is to say, the control command processing unit 721 of the second embodiment of the present invention includes functions of the local command receiving unit 122, the local command transmitting unit 123, and the input/output processing unit 51 of the first embodiment.

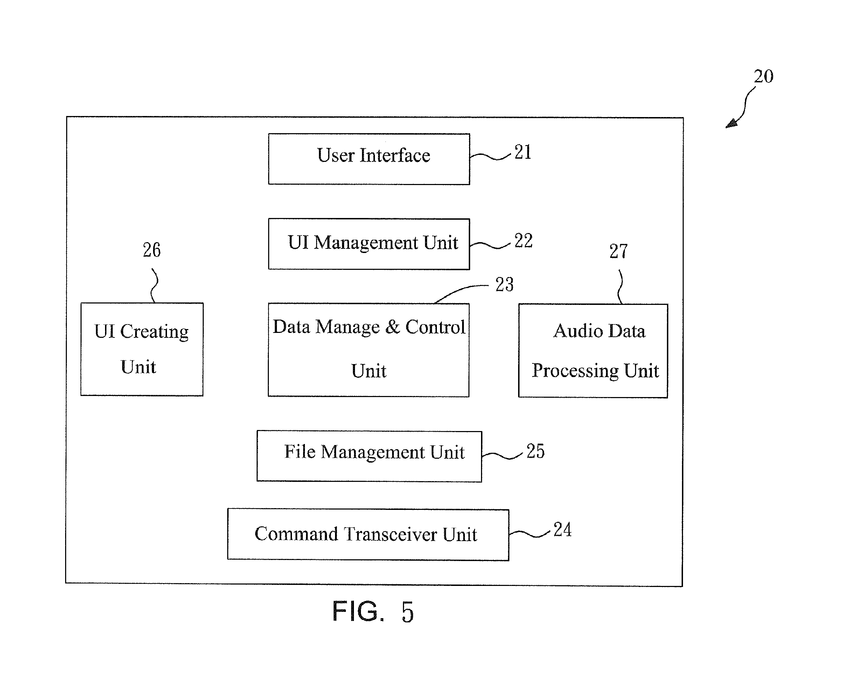

FIG. 5 is a block diagram of a digital audio processing controller module of a portable device according to the present invention. The digital audio processing controller module 20 of the present invention is disposed in a portable device 30 (FIG. 1) and includes a user interface (UI) 21, a UI management unit 22, a data manage & control unit 23, and a command transceiver unit 24. The UI 21 is used to display an operation screen of a digital audio processing device in a screen. The UI management unit 22 is used to determine an operation action of a user on the screen and to generate at least one control command. The data manage & control unit 23 is used to generate at least one audio control message according to the at least one control command. The command transceiver unit 24 is used to process the at least one audio control message into control command packet and to transmit the control command packet to the digital audio processing device. In an embodiment of the present invention, the command transceiver unit 24 is used to encode the at least one audio control message into control command packet.

Using the digital audio processing controller module of the portable device of the present invention, the user can perform an operation on the screen of the portable device to control the digital audio processing device (for example, select and play music), transmit the control command packet to the digital audio processing device, and load a song selected in a multimedia storage device after the command is parsed, so that the digital audio processing device can play and process the music selected by the user on the portable device.

Therefore, the user can use a large-size screen of the portable device to control the digital audio processing device to overcome the difficulty faced by DJ when operating the conventional digital audio processing device with a small-size screen, and through the capability of the portable device to process a database and through the characteristics of the large-size screen, the problem of establishing and editing selection and play lists from a large music database containing within the digital audio processing device can be solved, so as to overcome the shortage of the display function of the conventional digital audio processing device.

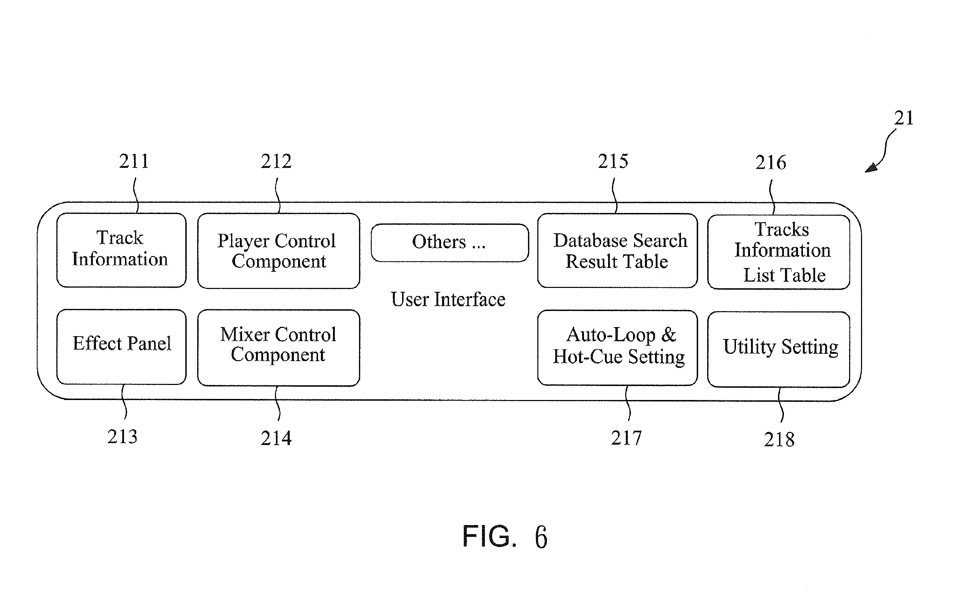

FIG. 6 is a block diagram of a UI of the present invention. In an embodiment of the present invention, the UI 21 displays an operation and display interface of the digital audio processing device with a UI software component provided by each operating system (OS) of the portable device. The interface can be pre-included in the digital audio processing device or can be an operation interface to be added by the user. The UI 21 includes a Track Information 211, a Player Control Component 212, an Effect Panel 213, a Mixer Control Component 214, a Database Search Result Table 215, a Tracks Information List Table 216, Auto-Loop & Hot-Cue Setting 217, and a Utility Setting 218.

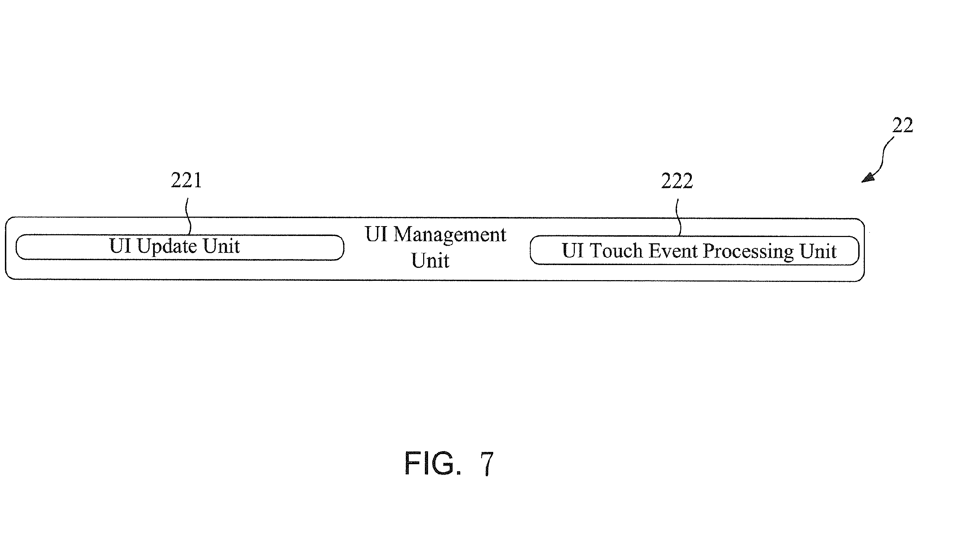

FIG. 7 is a block diagram of a UI management unit of the present invention. In an embodiment of the present invention, the UI management unit 22 is used to generate a UI software component provided by each OS of the portable device. The UI management unit 22 includes a UI update unit 221 and a UI touch event processing unit 222. The UI update unit 221 is used to update a display status of the UI, and the UI touch event processing unit 222 is used to determine an operation action of a user on the screen and to generate at least one control command. The UI management unit 22 can additionally manage flipping through the pages of the functions or update a display status of each function, such as information about the display of song's play time.

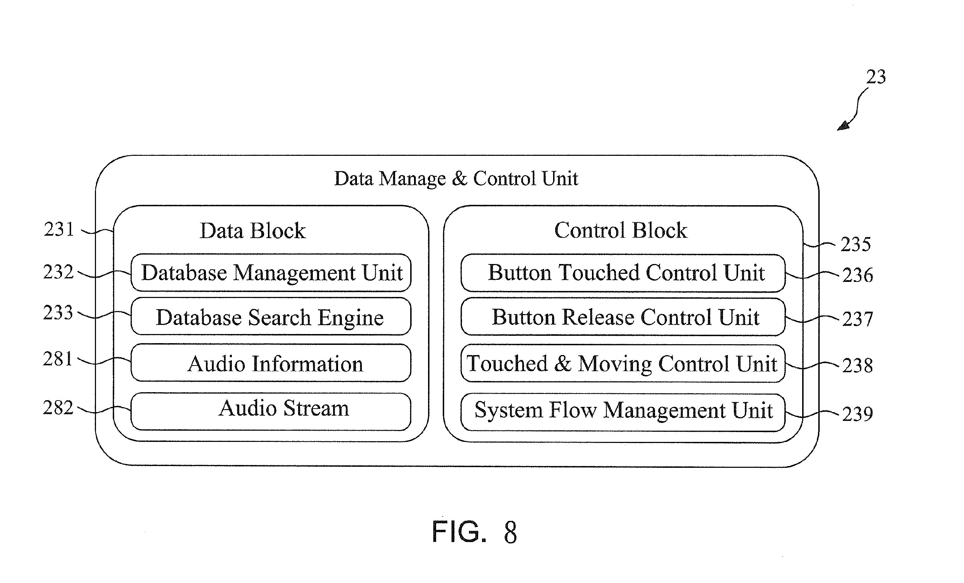

FIG. 8 is a block diagram of a data manage & control unit of the present invention. In an embodiment of the present invention, the data manage & control unit 23 includes a data block 231 and a control block 235. The data block 231 is used to store audio data corresponding to the digital audio processing device. The control block 235 is used to generate at least one audio control message according to at least one control command.

The data block 231 includes a database management unit 232, a database search engine 233, audio information 281, and an audio stream 282. The audio information 281 stores information about a song such as a filename, a title, an artist, an album, a genre, a BPM, and time data. The audio stream 282 is a stream of music actually played and could be compressed or decompressed data. The database management unit 232 is used to be synchronous with a database file of the digital audio processing device, and to perform continuous transmission of file and save the file in a storage medium of the portable device when in communication between the portable device and the digital audio processing device is interrupted unexpectedly.

The database search engine 233 is used to, according to search data input by the user on the screen, search audio information 281 for the database file and to transmit a search result to the UI management unit 22 to display the search result on the screen of the portable device. For example, a search result list enables the UI management unit 22 to generate a tracks information list table 216 of FIG. 6 to be displayed on the screen and to be further selected by the user.

The control block 235 includes a button touched control unit 236, a button release control unit 237, a touched & moving control unit 238, and a system flow management unit 239. The button touched control unit 236 is used to receive button touch of a user on the screen to generate a button touched message. The button release control unit 237 is used to receive button touch release of the user on the screen to generate a button release message. The touched & moving control unit 238 is used to receive touch and moving of the user on the screen to generate a touch and moving message. For example, a Play Button on the UI is displayed on the screen. When the user contacts the button with a finger, the UI management unit 22 starts a function of touching the button and the button touched control unit 236 generates a button touched message. When the finger of the user releases, a function of releasing the button is started, and the button release control unit 237 generates a button release message. Functions of buttons on the screen transmit the button touched message or the button release message to the command transceiver unit 24 for processing according to the definitions of the functions.

The system flow management unit 239 is used to synchronize a system flow of the digital audio processing device and the portable device. The system flow management unit 239 is used to process an event not generated by a user operation.

Referring to FIG. 5 and FIG. 8, the command transceiver unit 24 is used to receive at least one audio control message from the control block 235, to process the at least one audio control message into control command packet, and to transmit the control command packet to the digital audio processing device. Furthermore, the command transceiver unit 24 can receive a command and data transmitted by the digital audio processing device and transmit the command and the data to the data block 231 for processing.

In an embodiment of the present invention, the digital audio processing controller module 20 of the present invention further includes a file management unit 25, a UI creating unit 26, and an audio data processing unit 27. The file management unit 25 provides an uniform protocol function to be used by an upper layer software block of the portable device with a file access application interface (API) provided by each OS of the portable device. The UI creating unit 26 is used to parse a UI description file and to transmit a parsed result to the UI management unit 22 to generate various UI software components. The audio data processing unit 27 has the same function as the audio data processing unit 124 and will not be described here again.

Referring to FIG. 1 to FIG. 8, functions of the digital audio processing controller module of the portable device of the present invention are described.

### 1. UI establishment:

The digital audio processing controller module 20 of the portable device begins execution. The UI creating unit 26 reads a UI description file through the file management unit 25. The UI description file represents information such as a file name, a coordinate position, a size, and a layer of each component graph of a UI.

The UI creating unit 26 parses the information and then transmits the parsed information to the UI management unit 22 to generate a UI component conforming to each OS of the portable device and to arrange the UI component in a suitable position of the screen for display.

### 2. UI status updating:

When the user performs an operation on the digital audio processing device 50, firmware on the digital audio processing device 50 performs corresponding processing on the operation and, meanwhile, transmits the operation and a corresponding response status to the portable device 30 through the communication module 11.

After the portable device 30 receives the message, the OS determines whether the message is a message from the digital audio processing controller module 20 of the present invention, and informs the digital audio processing controller module 20 of the present invention.

The digital audio processing controller module 20 of the present invention processes the message through the command transceiver unit 24, transmits the processed message to the data manage & control unit 23, and updates a corresponding data field in the data block 231. Furthermore, the UI management unit 22 updates the display of the corresponding component due to the change of the data in the data block 231.

### 3. User touch response:

After the user clicks a certain position (corresponding to a button or a panel function of the digital audio processing device) on the screen of the portable device 30, the OS generates a touch event. The touch event is transmitted through the UI component to the UI management unit 22 for processing.

The UI management unit 22 determines the definition of the UI component (for example, to play, to cue, or to reloop) and determines which digital audio processing device owns the component, so as to generate at least one control command. The UI management unit 22 calls the corresponding data manage & control unit 23, generates at least one audio control message according to the at least one control command using the control block 235, and transmits the at least one audio control message to the command transceiver unit 24 for processing.

The command transceiver unit 24 processes the at least one audio control message into control command packet and transmits the control command packet to the digital audio processing device 50 through a network layer application interface provided by the OS.

### 4. Database files synchronization:

The database management unit 232 provides a database identify message and transmits the database identify message to the command transceiver unit 24 for processing. The command transceiver unit 24 processes the message and transmits the processed message to the digital audio processing device 50 through a network layer application interface (API) provided by the OS.

The digital audio processing device 50 responds to the message, generates a data block with a database ID, and sends the data block to the digital audio processing controller module 20 of the present invention as a response.

After processing the message, the command transceiver unit 24 determines whether the information belongs to the database management unit 232. The database management unit 232 obtains the database ID with which the digital audio processing device 50 responds, and the file management unit 25 searches for whether a database corresponding to the database ID has already existed in the storage medium of the portable device. If it is determined that the database file does not pre-exist in the portable device, then the database will be received; if it is determined that the database file pre-exists in the portable device, then active the database.

### 5. Active Database procedure:

The database management unit 232 reads the database file, parses the database file, and generates a database search result table 215 of various sorting types.

### 6. Database information application:

(1) User selecting a list of a certain sorting type:
   The UI management unit 22 reads a table of corresponding sorting types in the database management unit 232, and the UI management unit 22 displays the list on the screen.
(2) String searching:
   The UI management unit 22 transmits the string to the database search engine 233 for searching. The database search engine 233 searches the audio information 281 for song information and generates a search result. The UI management unit 22 displays the search result on the screen of the portable device.
(3) User selecting a song in the digital audio processing device:
   The command transceiver unit 24 receives a song selection message related to a song selected by the user using the digital audio processing device and transmits the message to the data block 231 for processing. The data block 231 parses the message and finds corresponding song information in the database management unit 232. The UI management unit 22 displays information about the song selected by the user using in the digital audio processing device, on the screen of the portable device.

### 7. Use of a storage medium without a database

The database management unit 232 request database identify and transmits the database identify to the command transceiver unit 24 for processing, then transmits the processed message to the digital audio processing device 50 through a network layer application interface (API) provided by the OS.

The digital audio processing device 50 responds to the message and sends a "No Database Support" message as a response. After processing the message, the command transceiver unit 24 determines that the information belongs to the data block 231, and the data block 231 makes a mark indicating that the digital disk is using a storage medium without database support.

The UI management unit 22 requests song information from the data block 231. The data block 231 searches the database management unit 232 for corresponding song information. As a result, the song information is not found.

The data block 231 puts forward a song information obtaining request on the control block 235. The control block 235 arranges the request in a queue of the system flow management unit 239. The system flow management unit 239 sequentially queries the digital audio processing device 50 for the audio information (for example, string information such as a filename, a title, an artist, an album, and a genre).

The command transceiver unit 24 receives the audio information sequentially (for example, the string such as the filename, the title, the artist, the album, and the genre) and transmits the audio information to the database management unit 232 for storage.

The UI management unit 22 requests a song information again. The data block 231 searches the database management unit 232 for corresponding song information. It is confirmed that the song information exists. The UI management unit 22 displays the song information on the screen of the portable device.

Referring to FIG. 1 to FIG. 8, the present invention provides a control system, including a portable device 30 and a digital audio processing device 50. The portable device 30 includes a digital audio processing controller module 20. The digital audio processing device 50 includes a data processing module 10. For the data processing module 10 and the digital audio processing controller module 20, reference can be made to the foregoing description and illustration, and the details will not be described here again. Therefore, the user can not only use the large-size screen of the portable device 30 to control the digital audio processing device 50, but also use the customized interface editing capability of the portable device 30 and exchange control messages with the digital audio processing device through the Wi-Fi bi-direction transmission, so as to resolve the problem that the digital audio processing device cannot extend the pre-fixed functions, and to meet the requirement of bi-directional remote control.

That is to say, under the condition where the hardware of the digital audio processing device is not changed, through the firmware updating and Wi-Fi connection with the portable device 30, the functions of the digital audio processing device can be additionally extended. For example, if the digital audio processing device was originally not designed to encompass a function of a Hot Cue key when it leaves the factory, the user can add the function of the Hot Cue key to the screen of the portable device 30, so that the Hot Cue key is controlled on the screen of the portable device 30, and a control result is transmitted to the digital audio processing device so that the digital audio processing device then possesses the Hot Cue function. Therefore, the extended functions of the digital audio processing device can be flexibly added in response to customer requirements.

The devices, the processing units, or the modules (for example, the digital audio processing controller module) according to the embodiments of the present invention can be implemented through hardware, software or a component including the hardware and software. Moreover, the devices can be implemented by a computer programmed product. The computer programmed product can be accessed by a computer available or computer accessable medium, and provides a program to be executed by a computer or by connecting to a computer or by any instruction to perform system operation. The computer available or accessable medium can be any device that is capable of including, storing, sending, propagating, or transmitting a program to be executed by a computer or by connecting to a computer or any instruction to perform system operation.

While the embodiments of the present invention have been illustrated and described, various modifications and improvements can be made by those skilled in the art. The embodiments of the present invention are therefore described in an illustrative but not restrictive sense. It is intended that the present invention may not be limited to the particular forms as illustrated, and that all modifications that maintain the spirit and scope of the present invention are within the scope as defined in the appended claims.

## Claims

1. A data processing module (10, 70) of a digital audio processing device (50, 60), **characterized in** comprising:
a communication module (11, 71), for receiving control command packet from a portable device (30); and
a digital data processing unit (12, 72), connected to the communication module (11, 71) and used to generate at least one control command according to the control command packet to process corresponding audio data.

2. The data processing module (10, 70) according to Claim 1, wherein the digital data processing unit (12, 72) comprises a Transmission Control Protocol/Internet Protocol (TCP/IP) module (13, 73) for communicating with the communication module (11, 71) and receiving the control command packet, and the communication module (11, 71) is a Wi-Fi communication module, and the TCP/IP module (13, 73) comprises:
a Wi-Fi driver (131, 731), for communicating with the Wi-Fi communication module (11, 71);
a receiving (RX) buffer (132, 732), for receiving the control command packet; and
a remote command receiving unit (133, 733), for receiving the control command packet from the RX buffer (132, 732).

3. The data processing module (10, 70) according to Claim 2, wherein the digital data processing unit (12, 72) comprises a control command processing unit (121, 721) for receiving the control command packet from the remote command receiving unit (133, 733) to generate at least one control command.

4. The data processing module (10, 70) according to Claim 3, wherein the TCP/IP module (13, 73) further comprises a remote command transmitting unit (134, 734) and a transmitting (TX) buffer (135, 735), the remote command transmitting unit (134, 734) is used to receive the control command from the control command processing unit (121, 721) to transmit the control command; the TX buffer (135, 735) is used to receive the control command from the remote command transmitting unit (134, 734) to transmit the control command to the Wi-Fi driver (131, 731); and the Wi-Fi communication module (11, 71) transmits the control command to the portable device (30).

5. A digital audio processing controller module (20) of a portable device (30), **characterized in** comprising:
a user interface (UI) (21), for displaying an operation screen of a digital audio processing device (50, 60) on a screen;
a UI management unit (22), for determining an operation action of a user on the screen and generating at least one control command;
a data manage & control unit (23), for generating at least one audio control message according to the at least one control command; and
a command transceiver unit (24), for processing the at least one audio control message into control command packet and transmitting the control command packet to the digital audio processing device (50, 60).

6. The digital audio processing controller module (20) according to Claim 5, wherein the UI management unit (22) comprises a UI update unit (221) and a UI touch event processing unit (222), the UI update unit (221) is used to update a display status of the UI (21) and the UI touch event processing unit (222) is used to determine the operation action of the user on the screen to generate the at least one control command.

7. The digital audio processing controller module (20) according to Claim 5 or 6, wherein the data manage & control unit (23) comprises a data block (231) and a control block (235), the data block (231) is used to store audio data corresponding to the digital audio processing device (50, 60) and the control block (235) is used to generate at least one audio control message according to the at least one control command.

8. The digital audio processing controller module (20) according to Claim 7, wherein the data block (231) comprises a database management unit (232), a database search engine (233), audio information (281) and audio stream (282), the database management unit (232) is used to store audio information and audio stream and to be synchronous with a database file of the digital audio processing device (50, 60) and the database search engine (233) is used to, according to search data input by the user on the screen, search audio information and audio stream and to transmit a search result to the UI management unit (22) to display the search result on the screen.

9. The digital audio processing controller module (20) according to Claim 7 or 8, wherein the control block (235) comprises a button touched control unit (236), a button release control unit (237), a touched & moving control unit (238) and a system flow management unit (239), the button touched control unit (236) is used to receive button touch of the user on the screen to generate a button touched message; the button release control unit (237) is used to receive button touch release of the user on the screen to generate a button release message; the touched & moving control unit (238) is used to receive touch and moving of the user on the screen to generate a touch and moving message; and the system flow management unit (239) is used to coordinate a system flow of the digital audio processing device (50, 60) and the portable device (30).

10. A control system, **characterized in** comprising:
a portable device (30) comprising a digital audio processing controller module (20) comprising:
a user interface (UI) (2 1), for displaying an operation screen of a digital audio processing device on a screen;
a UI management unit (22), for determining an operation action of a user on the screen and generating at least one control command;
a data manage & control unit (23), for generating at least one audio control message according to the at least one control command; and
a command transceiver unit (24), for processing the at least one audio control message into control command packet and transmitting the control command packet to the digital audio processing device; and
a digital audio processing device (50, 60) comprising a data processing module (10, 70) comprising:
a communication module (11, 71), for receiving control command packet from the portable device (30); and
a digital data processing unit (12, 72), connected to the communication module (11, 71) and used to generate at least one control command according to the control command packet to process corresponding audio data.

11. The control system according to Claim 10, wherein the UI management unit (22) comprises a UI update unit (221) and a UI touch event processing unit (222), the UI update unit (221) is used to update a display status of the UI (21) and the UI touch event processing unit (222) is used to determine the operation action of the user on the screen to generate the at least one control command.

12. The control system according to Claim 10 or 11, wherein the data manage & control unit (23) comprises a data block (231) and a control block (235), the data block (231) is used to store audio data corresponding to the digital audio processing device (50, 60) and the control block (235) is used to generate at least one audio control message according to the at least one control command.

13. The control system according to Claim 12, wherein the data block (231) comprises a database management unit (232), a database search engine (233), audio information (281) and audio stream (282), the database management unit (232) is used to store audio information and audio stream and to be synchronous with a database of the digital audio processing device (50, 60) and the database search engine (233) is used to, according to search data input by the user on the screen, search audio information and audio stream and to transmit a search result to the UI management unit (22) to display the search result on the screen.

14. The control system according to Claim 12 or 13, wherein the control block (235) comprises a button touched control unit (236), a button release control unit (237), a touched & moving control unit (238) and a system flow management unit (239), the button touched control unit (236) is used to receive button touch of the user on the screen to generate a button touched message; the button release control unit (237) is used to receive button touch release of the user on the screen to generate a button release message; the touched & moving control unit (238) is used to receive touch and moving of the user on the screen to generate a touch and moving message; and the system flow management unit (239) is used to coordinate a system flow of the digital audio processing device (50, 60) and the portable device (30).

15. The control system according to any of the Claims 10 to 14, wherein the digital data processing unit (12, 72) comprises a Transmission Control Protocol/Internet Protocol (TCP/IP) module (13, 73) for communicating with the communication module (11, 71) and receiving the control command packet, and the communication module (11, 71) is a Wi-Fi communication module, and the TCP/IP module (13, 73) comprises:
a Wi-Fi driver (131, 731), for communicating with the Wi-Fi communication module (11, 71);
a receiving (RX) buffer (132, 732), for receiving the control command packet; and
a remote command receiving unit (133, 733), for receiving the control command packet from the RX buffer (132, 732).

16. The control system according to Claim 15, wherein the digital data processing unit (12, 72) comprises a control command processing unit (121, 721) for receiving the control command packet from the remote command receiving unit (133, 733) to generate at least one control command.

17. The control system according to Claim 16, wherein the TCP/IP module (13, 73) further comprises a remote command transmitting unit (134, 734) and a transmitting (TX) buffer (135, 735), the remote command transmitting unit (134, 734) is used to receive the control command from the control command processing unit (121, 721) to transmit the control command; the TX buffer (135, 735) is used to receive the control command from the remote command transmitting unit (134, 734) to transmit the control command to the Wi-Fi driver (131, 731); and the Wi-Fi communication module (11, 71) transmits the control command to the portable device (30).
